(19) Europäisches Patentamt
European Patent Office
Office européen des brevets

(11) Numéro de publication: **0 275 804 B1**

(12) # FASCICULE DE BREVET EUROPEEN

(45) Date de publication de fascicule du brevet: **02.10.91**

(51) Int. Cl.5: **C07F 9/40**

(21) Numéro de dépôt: **87420345.8**

(22) Date de dépôt: **17.12.87**

(54) **Préparation d'intermédiaires phosphorés pour usage herbicide.**

(30) Priorité: **18.12.86 FR 8618308**

(43) Date de publication de la demande: **27.07.88 Bulletin 88/30**

(45) Mention de la délivrance du brevet: **02.10.91 Bulletin 91/40**

(84) Etats contractants désignés: **AT BE CH DE ES FR GB GR IT LI LU NL SE**

(56) Documents cités: **EP-A- 0 189 725**

(73) Titulaire: **RHONE-POULENC AGROCHIMIE
14-20, rue Pierre Baizet
F-69009 Lyon(FR)**

(72) Inventeur: **Corbet, Jean Pierre,
7 Chemin de Charrière Blanche
F-69130 Ecully(FR)**
Inventeur: **Mulhauser,Michel
Résidence Charrière Blanche Immeuble Frène 4
F-69130 Ecully(FR)**

(74) Mandataire: **Ranguis, Patrick Frédéric et al
RHONE POULENC AGROCHIMIE 14-20 Rue Pierre Baizet
F-69009 Lyon(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services

## Description

La présente invention concerne un procédé de préparation de composés de formule :

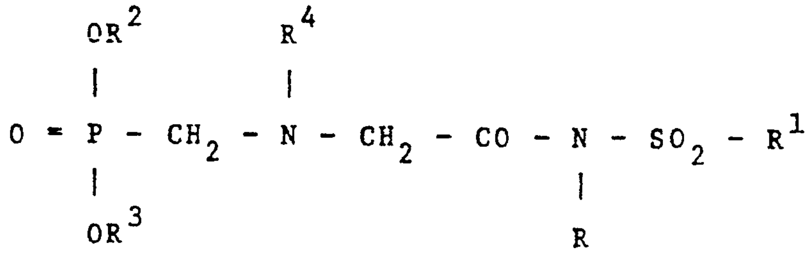

(I)

par réaction de produits de formule :

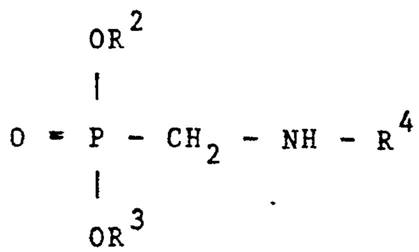

(II)

avec des produits de formule :

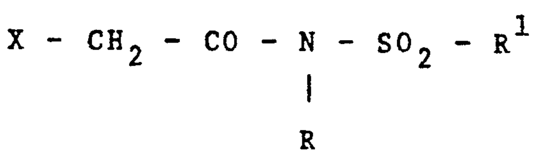

(III)

dans lesquelles

- $R^1$ représente un radical hydrocarboné, spécialement alkyle, aryle, ou cycloalkyle, ces divers radicaux pouvant éventuellement être substitués ; comme substituants, on peut citer en particulier, les atomes d'halogène et les groupes phényle, cyano, alkyle, alkoxyle, carboxylate d'alkyle, dans lesquels les groupes alkyle ont de préférence de 1 à 4 atomes de carbone ; $R^1$ a le plus souvent de 1 à 10 atomes de carbone, de préférence de 1 à 7 atomes de carbone, et plus spécialement de 3 à 7 atomes de carbone lorsqu'il s'agit d'un groupe cycloalkyle ; de préférence il s'agit d'un radical alkyle ayant de 1 à 4 atomes de carbone, éventuellement halogéné, notamment chloré ou fluoré, par exemple $CF_3$,
- R représente l'atome d'hydrogène ou a l'une des significations donnée pour $R^1$, et est de préférence un groupe alkyle de 1 à 4 atomes de carbone,
- $R^2$ et $R^3$ sont tels que $OR^2$ et $OR^3$ sont des groupements hydrolysables ; $R^2$ et $R^3$ peuvent être notamment un radical alkyle, aryle, arylaklyle, éventuellement substitués, notamment par des substituants tels que ceux indiqués pour $R_1$, ou peuvent constituer ensemble un radical unique divalent, ayant de préférence de 2 à 6 atomes de carbone, comme par exemple les radicaux alkylène éventuellement substitués (par exemple un radical éthylène ou propylène) ; ils ont généralement, de 1 à 12 atomes de carbone et de préférence de 1 à 8 atomes de carbone,
- $R^4$ représente un radical de formule $Ar(R^5)(R^6)C$-dans laquelle Ar est en groupe aromatique, de préférence phényle, éventuellement substitués et $R^5$ et $R^6$ sont l'atome d'hydrogène ou un radical (aromatique) Ar ou un groupe alkyle ayant, de préférence au plus 6 atomes de carbone,
- X représente un atome d'halogène tel que le chlore, le brome, l'iode, de préférence le chlore.

Comme substituants du groupe Ar on peut citer les radicaux alkyle, alkoxyle, nitro, les atomes d'halogènes

On connait une telle réaction par la demande de brevet européen n° 0189725. Les composés sont des intermédiaires pour herbicides.

Un objet de la présente invention est de proposer un procédé amélioré de préparation du composé de formule (I) pour une meilleure mise en oeuvre industrielle.

Un autre objet de la présente invention est de proposer un procédé de préparation simplifié.

Ledit procédé est caractérisé en ce que le rapport molaire du composé (II) au composé (III) est supérieur à 1,5.

La réaction selon l'invention peut s'effectuer en absence ou généralement, en présence de solvant. Cette présence permet en effet de mieux contrôler la température. Comme solvant, on utilise un solvant organique, inerte à chaud.

Comme solvants utilisables on peut citer les nitriles (notamment l'acétonitrile), les cétones (notamment l'acétone, la cyclohexanone, la méthyléthylcétone, la méthylisobutylcétone), les hydrocarbures, halogénés ou non (notamment le benzène, le toluène, les xylènes, le chlorobenzène), les esters tels qui les alcanoates d'alkyle (notamment l'acétate d'éthyle), et les solvants polaires aprotiques, tels que le diméthylformamide et la N-méthyl pyrrolidone.

La température de la réaction est généralement comprise entre 30 et 150 °C, de préférence entre 40 et 120 °C.

Le produit de réaction peut être isolé par tout moyen connu en soi.

Certains produits de formule (II) sont connus (Tetrahedron letters n° 46 p. 4645,1973). Il se préparent commodément par réaction de tris(aralkyl)hexahydrotriazines avec des diorganophosphites.

Les réactifs de formule (III) sont aussi connus.

De préférence, le rapport molaire du composé (II) au composé (III) est supérieur à 1,8, avantageusement compris entre 1,9 et 4.

Il a été trouvé que les rapports molaires du procédé de préparation selon l'invention permettait d'éviter la présence d'accepteur d'acide supplémentaire. Cela conduit à deux avantages importants d'abord la suppression de toute étape d'élimination dudit accepteur d'acide et cela permet également d'augmenter le rendement.

L'invention est donc caractérisée, selon une variante préférée, en ce que la réaction est effectuée en absence ou en quasi absence d'accepteur d'acide supplémentaire. Par quasi absence, on entend que le milieu réactionnel peut contenir pour diverses raisons des traces d'accepteur.

Une autre conséquence importante de cette absence ou quasi absence d'accepteur d'acide supplémentaire est que cela permet de mettre en oeuvre un procédé de recyclage améliorant encore notablement le rendement et la mise en oeuvre industrielle.

Ainsi selon une variante du procédé selon l'invention, le procédé est effectué en continu par recyclage du produit de formule (II).

Ce recyclage est assuré par extraction en fin de réaction du produit de formule (II) n'ayant pas réagi, en milieu aqueux acide, puis passage en phase organique après neutralisation.

Le procédé est plus particulièrement adapté aux composés où R et $R_1$ sont des groupes alkyle de 1 à 4 atomes de carbone, de préférence méthyle, et/ou $R_2$ et $R_3$ sont les groupes alkyle, phényle ou benzyle.

Les exemples suivants donnés à titre non limitatif, illustrent l'invention et montrent comment elle peut être mise en oeuvre.

Exemple 1

On chauffe 2 h à 80 °C, un mélange de 11,43 g (4 x $10^{-2}$ moles) de N-benzylaminométhane phosphonate de diisopropyle (PM 285) et 3,71 g (2 x $10^{-2}$ moles) de N-méthyl N-méthylsulfonyl chloroacétamide. Le mélange réactionnel est dilué jusqu'à 50 ml avec du toluène et traité avec de l'eau et de l'acide chlorydrique. La phase aqueuse et la phase toluénique sont séparées. La phase toluénique est concentrée et par chromatographie on constate que l'on a obtenu 8,025 g de produit ce qui correspond à un rendement de 92,4 % par rapport au N-méthyl N-méthylsulfonyl chloroacétamide engagé.

La phase aqueuse contenant le chlorhydrate de N-benzylaminométhane phosphonate de diisopropyle est coulée sur 20 ml de toluène, le mélange est neutralisé avec une quantité stoechiométrique de soude aqueuse 2 N. La phase aqueuse et la phase toluénique sont séparées. La phase toluénique contient 1,82 x $10^{-2}$ mole de N-benzylaminométhane phosphonate de diisopropyle sous forme de base recyclable après éventuellement distillation du toluène.

Exemple 2 :

Le même essai effectué à 70 °C conduit à un rendement par chromatographie de 72,5 % par rapport au N-méthyl N-méthylsulfonyl chloroacétamide engagé.

Exemple 3 :

Le même essai effectué à 90° C conduit à un rendement par chromatographie de 86,7 % par rapport au N-méthyl N-méthylsulfonyl chloroacétamide engagé.

Example 4 comparatif :

5,71 g (2 x $10^{-2}$ mole) de N-benzylaminométhane phosphonate de diisopropyle et 3,71 g (2 x $10^{-2}$ mole) de N-méthyl N-méthylsulfonyl chloroacétamide sont chauffés pendant 2 h à 80° C. Une solution de 2,8 ml de triéthylamine (2 x $10^{-2}$ mole) dans 15 ml de toluène est coulée progressivement en 5 h dans le mélange réactionnel maintenu à 80° C. Le mélange est ensuite refroidi à 20° C, coulé sur 15 ml d'eau à température ambiante, la phase aqueuse et la phase toluénique sont séparées. La phase toluénique est concentrée sous vide. Par chromatographie, on constate que l'on a obtenu 6,6 g de produit attendu ce qui correspond à un rendement de 75,8 % par rapport aux 2 réactifs chargés.

Exemple 5 :

59,5 g de tribenzyl-1,3,5 hexahydrotriazine (0,166 mole), 83 g de diisopropyle phosphite (0,5 mole) et 100 g de toluène sont chauffés pendant 4 h30 à 120° C. Le mélange est refroidi à 20° C. Un dosage par chromatographie indique que le rendement de la réaction en N-benzylaminométhane phosphonate de diisopropyle est quantitatif. 37,1 g de N-méthyl N-méthylsulfonyl chloroacétamide (0,2 mole) sont additionnés. Le mélange réactionnel est chauffé à 80° C pendant 2 heures, puis refroidi à température ambiante. Il est ensuite coulé sur 150 g d'eau et 12 mol d'HCl aqueux 37 % sont additionnés pour amener le pH à 1. Les phases sont décantées et séparées. La phase organique a un poids de 173 g. La phase aqueuse (265 g) est neutralisée à pH = 6 avec 30 ml de soude aqueuse à 30 % après avoir ajouté 100 g de toluène. Les phases sont décantées et séparées. La 2ème phase organique a un poids de 195 g.

La lère phase organique (173 g) contient 44,6 % de produit attendu, soit 0,18 mole. La 2ème phase organique (195 g) contient 42 % de N-benzyl aminométhane phosphonate de diisopropyle soit 0,287 mole.

ler recyclage :

La 2ème phase organique (195 g) est sèchée azéotropiquement (67 g de toluène et d'eau sont éliminés), puis 120 g d'une solution toluénique contenant 0,25 mole de N-benzylaminométhane phosphonate de diisopropyle et 37, 1 g (0,2 mole) de N-méthyl N-méthylsulfonyl chloroacétamide sont additionnés, le mélange est chauffé 2 h à 80° C. La masse réactionnelle est traitée exactement comme avant.

2ème recyclage :

Un 2ème recyclage de N-benzylaminométhane phosphonate de diisopropyle a été réalisé exactement comme le précédent.

L'ensemble des résultats figurent dans le tableau suivant :

A = N-benzylaminométhane phosphonate de diisopropyle

B = N-méthyl N-méthylsulfonyl chloroacétamide

C = produit de condensation attendu

| Matières premières engagées | A- recyclée | Rdt /B de C |
|---|---|---|
| A - 0,5 mole<br>B - 0,2 mole | | 89 % |
| 1° recyclage A - 0,25 mole<br>B - 0,2 mole | 0,28 mole | 100 % |
| 2° recyclage A - 0,25 mole<br>B - 0,2 mole | 0,18 mole | 100 % |

## Revendications

**1.** Procédé de préparation de composés de formule :

$$\begin{array}{ccccccccccccc} & & OR^2 & & & & R^4 & & & & & & \\ & & | & & & & | & & & & & & \\ O & = & P & - & CH_2 & - & N & - & CH_2 & - & CO - & N & - SO_2 - R^1 \\ & & | & & & & & & & & & | & \\ & & OR^3 & & & & & & & & & R & \end{array} \qquad (I)$$

caractérisé en ce qu'on fait réagir des produits de formule

$$\begin{array}{ccccccc} & & OR^2 & & & & \\ & & | & & & & \\ O & = & P & - & CH_2 & - & NH - R^4 \\ & & | & & & & \\ & & OR^3 & & & & \end{array} \qquad (II)$$

avec des produits de formule :

$$\begin{array}{ccc} X - CH_2 - CO - & N & - SO_2 - R^1 \\ & | & \\ & R & \end{array} \qquad (III)$$

dans lesquelles

- $R^1$ représente un radical $C_1$-$C_{18}$ alkyle, $C_6$-$C_{18}$ aryle, $C_3$-$C_{18}$ cycloalkyle, ces divers radicaux

pouvant éventuellement être substitués, par des atomes d'halogène ou des groupes phényle, cyano, alkyle, alkoxyle, carboxylate d'alkyle,

- R représente l'atome d'hydrogène ou a l'une des significations donnée pour $R^1$,
- $R^2$ et $R^3$ sont tels que $OR^2$ et $OR^3$ sont des groupements hydrolysables,
- $R^4$ représente un radical de formule $AR(R^5)(R^6)C$-dans laquelle Ar est un groupe phényle, éventuellement substitué par des radicaux alkyle, alkoxyle, nitro et les atomes d'halogène $R^5$ et $R^6$ sont l'atome d'hydrogène ou un radical Ar ou un groupe $C_1$-$C_6$ alkyle,
- X représente un atome d'halogène,

ledit procédé étant caractérisé en ce que le rapport molaire du composé (II) au composé (III) est supérieur à 1,5.

**2.** Procédé selon la revendication 1, caractérisé en ce que le rapport molaire du composé (II) au composé (III) est supérieur à 1,8.

**3.** Procédé selon la revendication 2, caractérisé en ce que le rapport molaire est compris entre 1, 9 et 4.

**4.** Procédé selon la revendication 1, caractérisé en ce que la réaction est effectuée en absence ou en quasi absence d'accepteur d'acide supplémentaire.

**5.** Procédé selon la revendication 1, caractérisé en ce que R et $R_1$ sont des groupes alkyle de 1 à 4 atomes de carbone,.

**6.** Procédé selon la revendication 1, caractérisé en ce que $R_2$ et $R_3$ sont des groupes $C_1$-$C_{12}$ alkyle, phényle ou benzyle, éventuellement substitués par des atomes d'halogène ou des groupes phényle, cyano, alkyle, alkoxyle, carboxylate d'alkyle.

**7.** Procédé selon la revendication 1, caractérisé en ce que l'on opère entre 30 et 150° C, de préférence entre 40 et 120° C.

**8.** Procédé selon la revendication 1, caractérisé en ce que l'on opère en présence d'un solvant.

**9.** Procédé selon la revendication 8, caractérisé en ce que le solvant est un nitrile ou une cétone ou un ester ou un hydrocarbure halogène ou non, ou un solvant polaire aprotique.

**10.** Procédé selon l'une des revendications précédentes, caractérisé en ce que le produit de formule (II) n'ayant pas réagi est recyclé.

**11.** Procédé selon la revendication 10, caractérisé en ce que le recyclage est assuré après addition au milieu réactionnel d'un milieu aqueux acide, séparation, puis repassage en phase organique après neutralisation.

## Claims

**1.** Process for the preparation of compounds of formula:

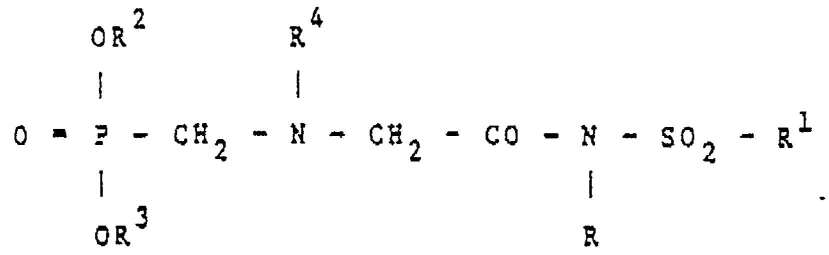

(I)

characterised in that products of formula:

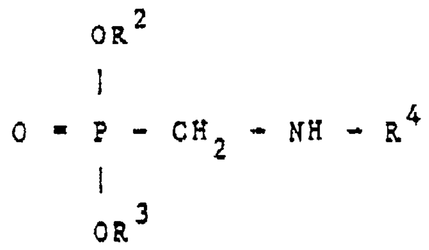

(II)

are reacted with products of formula:

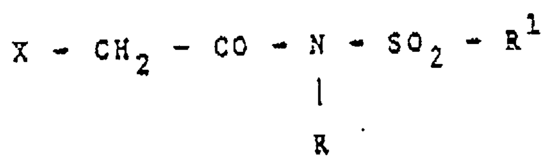

(III)

in which

- $R^1$ represents a $C_1$-$C_{18}$ alkyl, $C_6$-$C_{18}$ aryl or $C_3$-$C_{18}$ cycloalkyl radical, it being possible for these various radicals to be optionally substituted, by halogen atoms or phenyl, cyano, alkyl, alkoxy or alkylcarboxylate groups,
- R represents a hydrogen atom or has one of the meanings given for $R^1$,
- $R^2$ and $R^3$ are such that $OR^2$ and $OR^3$ are groups which can be hydrolysed,
- $R^4$ represents a radical of formula $Ar(R^5)(R^6)C$- in which Ar is a phenyl group, optionally substituted by alkyl, alkoxy or nitro radicals and halogen atoms, and $R^5$ and $R^6$ are a hydrogen atom or a radical Ar or a $C_1$-$C_6$ alkyl group, and
- X represents a halogen atom,

the said process being characterised in that the molar ratio of compound (II) to compound (III) is greater than 1.5.

**2.** Process according to Claim 1, characterised in that the molar ratio of compound (II) to compound (III) is greater than 1.8.

**3.** Process according to Claim 2, characterised in that the molar ratio is between 1.9 and 4.

**4.** Process according to Claim 1, characterised in that the reaction is carried out in the total or near total absence of additional acceptor for acid.

**5.** Process according to Claim 1, characterised in that R and $R_1$ are alkyl groups containing from 1 to 4 carbon atoms.

**6.** Process according to Claim 1, characterised in that $R_2$ and $R_3$ are $C_1$-$C_{12}$ alkyl, phenyl or benzyl groups optionally substituted by halogen atoms or phenyl, cyano, alkyl, alkoxy or alkylcarboxylate groups.

**7.** Process according to Claim 1, characterised in that the reaction is carried out between 30 and 150 °C and preferably between 40 and 120 °C.

**8.** Process according to Claim 1, characterised in that the reaction is carried out in the presence of a solvent.

**9.** Process according to Claim 8, characterised in that the solvent is a nitrile or a ketone or an ester or a halogenated or non-halogenated hydrocarbon, or an aprotic polar solvent.

**10.** Process according to one of the preceding claims, characterised in that the unreacted product of formula (II) is recycled.

11. Process according to Claim 10, characterized in that the recycling is accomplished after adding to the reaction medium an acid aqueous medium, separation and then passing into the organic phase after neutralization.

## Patentansprüche

1. Verfahren zur Herstellung von Verbindungen der Formel:

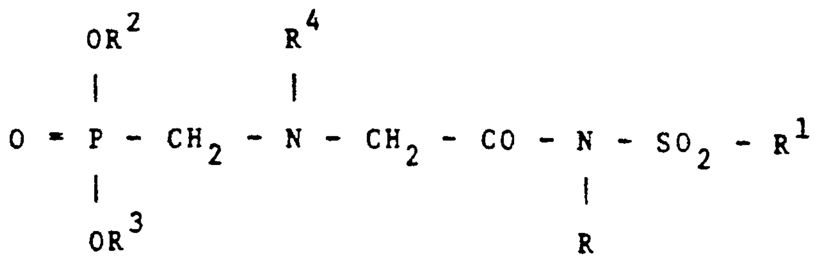

(I)

dadurch gekennzeichnet, daß man Verbindungen der Formel:

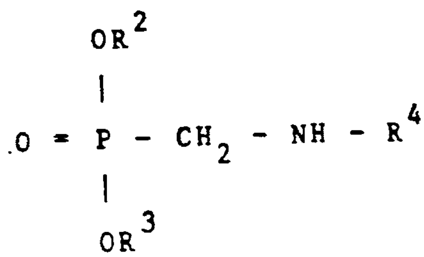

(II)

umsetzt mit Verbindungen der Formel:

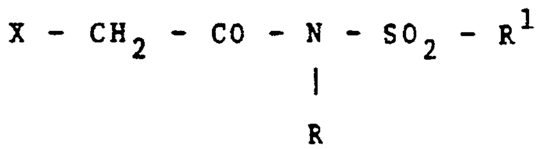

(III)

wobei
- $R^1$ einen $C_1$-$C_{18}$-Alkyl-, $C_6$-$C_{18}$-Aryl-, $C_3$-$C_{18}$-Cycloalkylrest bedeutet, wobei die einzelnen Reste gegebenenfalls substituiert sein können durch Halogenatome oder durch Phenyl-, Cyano-, Alkyl-, Alkoxy-, Alkoxycarboxylatgruppen,
- R ein Wasserstoffatom bedeutet oder eine der für $R^1$ angegebenen Bedeutungen hat,
- $R^2$ und $R^3$ so gewählt sind, daß $OR^2$ und $OR^3$ hydrolysierbare Gruppen sind,
- $R^4$ einen Rest der Formel $Ar(R^5)(R^6)C$- bedeutet, in dem Ar eine Phenylgruppe, die gegebenenfalls substituiert ist durch Alkyl-, Alkoxy-, Nitroreste oder Halogenatome, bedeutet, $R^5$ und $R^6$ Wasserstoffatome oder einen Rest Ar oder eine $C_1$-$C_6$-Alkylgruppe sind,
- X ein Halogenatom bedeutet,

wobei das Verfahren dadurch charakterisiert ist, daß das Molverhältnis von Verbindung II zu Verbindung III größer als 1,5 ist.

2. Verfahren nach Anspruch 1, dadurch gekennzeichnet, daß das Molverhältnis der Verbindung II zu Verbindung III größer als 1,8 ist.

3. Verfahren nach Anspruch 2, dadurch gekennzeichnet, daß das Molverhältnis zwischen 1,9 und 4 liegt.

4. Verfahren nach Anspruch 1, dadurch gekennzeichnet, daß die Reaktion in Abwesenheit oder nahezu Abwesenheit eines zusätzlichen Säureakzeptors durchgeführt wird.

5. Verfahren nach Anspruch 1, dadurch gekennzeichnet, daß R und $R^1$ Alkylgruppen mit 1 bis 4 Kohlenstoffatomen sind.

6. Verfahren nach Anspruch 1, dadurch gekennzeichnet, daß $R^2$ und $R^3$ $C_1$-$C_6$-Alkyl-, Phenyl- oder Benzylgruppen sind, die gegebenenfalls substituiert sind durch Halogenatome oder Phenyl-, Cyano-, Alkyl-, Alkoxy- oder Alkylcarboxylat-gruppen.

7. Verfahren nach Anspruch 1, dadurch gekennzeichnet, daß man bei 30 bis 150 °C, vorzugsweise 40 bis 120 °C, arbeitet.

8. Verfahren nach Anspruch 1, dadurch gekennzeichnet, daß man in Gegenwart eines Lösungsmittels arbeitet.

9. Verfahren nach Anspruch 8, dadurch gekennzeichnet, daß das Lösungsmittel ein Nitril oder ein Keton oder ein Ester oder ein halogenierter oder nicht halogenierter Kohlenwasserstoff oder ein polares aprotisches Lösungsmittel ist.

10. Verfahren nach einem der vorangehenden Ansprüche, dadurch gekennzeichnet, daß das nicht umgesetzte Produkt der Formel II zurückgeführt wird.

11. Verfahren nach Anspruch 10, dadurch gekennzeichnet, daß die Rückführung durchgeführt wird nach Zugabe einer wäßrigen Säure zu dem Reaktionsmedium, Abtrennung und anschließende Rückführung in organischer Phase nach Neutralisation.